# EUROPÄISCHE PATENTANMELDUNG

(11) **EP 2 722 320 A1**
(43) Veröffentlichungstag der Anmeldung: **23.04.2014**
(21) Anmeldenummer: 12007248.3
(22) Anmeldetag: 19.10.2012
(51) Int. Cl.: C04B 41/48, C04B 41/63, C04B 41/00

(54) **Verfahren zum elektrostatischen Pulverbeschichten eines Betonformteils und Betonverbundmaterial, umfassend ein Betonformteil und eine Pulverbeschichtung**

(71) Anmelder: Diebald GmbH & Co. KG, 85662 Hohenbrunn (DE)
(72) Erfinder: Diebald, Norbert, 85662 Hohenbrunn (DE); Diebald, Florian, 85662 Hohenbrunn (DE)
(74) Vertreter: Grünecker, Kinkeldey, Stockmair & Schwanhäusser

(57) **Zusammenfassung**

Die vorliegende Erfindung betrifft ein Verfahren zur elektrostatischen Pulverbeschichtung eines Betonformteils, umfassend die Schritte: Erden eines Betonformteils, Besprühen des geerdeten Betonformteils mit einem Pulverlack und Trocknen des besprühten Betonformteils, wobei die Pulverbeschichtung direkt auf das Betonformteil aufgetragen wird. Ferner betrifft die Erfindung ein Betonverbundmaterial, umfassend ein Betonformteil und eine Pulverbeschichtung, dadurch gekennzeichnet, dass es erhältlich ist nach einem elektrostatischen Pulverbeschichtungsverfahren, umfassend die Schritte: Erden eines Betonformteils; Besprühen des geerdeten Betonformteils mit einem Pulverlack und Trocknen des besprühten Betonformteils, wobei die Pulverbeschichtung direkt auf das Betonformteil aufgetragen wird. Das erfindungsgemäße Betonverbundmaterial eignet sich zur Verwendung als Betonbauteil oder Dekorationsgegenstand.

## Beschreibung

Die vorliegende Erfindung betrifft ein Verfahren zum elektrostatischen Pulverbeschichten eines Betonformteils sowie ein Betonverbundmaterial, umfassend ein Betonformteil und eine Pulverbeschichtung, zur Verwendung als Dekorationsgegenstand.

Das Pulverbeschichten ist ein Beschichtungsverfahren, bei dem ein elektrisch leitender Werkstoff mit einem Pulverlack beschichtet wird. Dabei ist das Ausgangsmaterial ein Pulverlack, welcher elektrisch aufgeladen wird und gegen die Oberfläche eines Objekts gesprüht wird, wobei der Pulverlack an dem Objekt aufgrund der elektrostatischen Wechselwirkung für einige Zeit anhaftet und durch Erhitzen auf seinen Schmelzpunkt vernetzt wird. Das Beschichtungsverfahren eignet sich besonders zur Anwendung auf Werkstoffe, welche elektrisch leitend sind und eine gute Hitzebeständigkeit aufweisen. Ist die Oberfläche des Objekts nichtleitend, so gestaltet sich die Haftung des Pulverlacks auf der Oberfläche des Werkstoffs zwischen dem Besprühen und dem Trocknen als schwierig, da keine elektrostatische Wechselwirkung zwischen Objekt und Pulverlack vorhanden ist.

Verschiedene Verfahren wurden entwickelt, um die Pulverbeschichtung auch auf Objekte mit nichtleitender Oberfläche anwenden zu können.

Die DE-T2-69610930 beschreibt ein Verfahren zum Pulverbeschichten von Objekten mit geringer Hitzebeständigkeit und nichtleitender Oberfläche wie z.B. Holz, Holzfaserplatten und Kunststoff-Objekten. Um das Pulver auf der Oberfläche des Objekts festzuhalten, werden drei Alternativen vorgestellt: das Erhitzen des Objekts auf die Schmelztemperatur des Pulvers; das Sprühen des Pulvers in eine erhitzte Atmosphäre, so dass das Pulver im geschmolzenen Zustand auf die Oberfläche des Objekts trifft und so verklebt; sowie das Festhalten des Pulvers durch elektrostatische Kräfte, indem die Oberfläche des nichtleitenden Objekts durch Auftragung eines leitenden Lacks oder einer Feuchtigkeitsschicht leitend gemacht wird.

Die DE-A1-10206592 offenbart ein Verfahren zur Aufbereitung von elektrisch nichtleitenden Oberflächen eines Kernmaterials, wie Gips, Gipsfaserbeton, Glas oder Stein, zum nachfolgenden Pulverbeschichten. In dem Beschichtungsverfahren muss die Oberfläche des Kernmaterials mit mindestens einem materialabhängigen flüssigen Mittel beschichtet werden, wobei die obere Schicht des materialabhängigen flüssigen Mittels elektrisch leitfähig ist. Das flüssige Mittel kann handelsübliche Farbe oder handelsüblicher Lack sein, welche mit Leitmitteln, wie pulverisiertem Aluminiumoxid oder reinem Metall, versetzt sind.

Die US-B2-7998571 betrifft Bauteile auf Zement-Basis, die mit einer Pulverbeschichtung versehen sind. Um die Pulverbeschichtung auf das Zementbauteil aufbringen zu können, muss eine Zwischenschicht auf das Betonteil aufgebracht werden, die z.B. eine Versiegelung, eine Zwischenschicht mit modifizierter Oberflächen porosität oder eine Zwischenschicht mit einer modifizierten Oberflächenfeuchtigkeit darstellen kann.

Der Nachteil der bekannten Verfahren besteht darin, dass zur Erhöhung der Leitfähigkeit des Werkstoffs vor Applikation des Pulverlacks eine Zwischenschicht auf das Beschichtungsobjekt aufgetragen werden muss, um die Haftung des elektrostatisch aufgebrachten Pulverlacks auf der Objektoberfläche zu gewährleisten. Jedoch kann solch eine Zwischenschicht Unregelmäßigkeiten auf der Objektoberfläche verursachen, was einer gleichmäßigen Auftragung des Pulverlacks entgegensteht. Ferner kann die Haftungsstabilität des Pulverlacks auf der Objektoberfläche durch die Zwischenschicht vermindert sein, was zu Beschädigungen der Beschichtung führen kann. In diesem Zusammenhang lehrt insbesondere die DE-T2-69610930, dass der Zusatz von Wasser auf der Objektoberfläche das Anhaften der Pulverschicht verschlechtert sowie zu Beschädigungen in der Beschichtung durch den Einschluss des Wassers führen kann.

Aufgabe der vorliegenden Erfindung ist es daher, ein elektrostatisches Pulverbeschichtungsverfahren bereit zu stellen, welches es erlaubt, eine Pulverbeschichtung direkt auf ein Betonformteil aufzubringen.

Diese Aufgabe wird gelöst durch ein Verfahren zur elektrostatischen Pulverbeschichtung eines Betonformteils, umfassend die folgenden Schritte:
- Erden eines Betonformteils,
- Besprühen des geerdeten Betonformteils mit einem Pulverlack und
- Trocknen des besprühten Betonformteils,
wobei die Pulverbeschichtung direkt auf das Betonformteil aufgetragen wird.

Ein weiterer Aspekt der vorliegenden Erfindung liegt in der Bereitstellung eines Betonverbundmaterials, umfassend ein Betonformteil und eine Pulverbeschichtung, **dadurch gekennzeichnet, dass** es gemäß dem erfindungsgemäßen Pulverbeschichtungsverfahren erhältlich ist, umfassend die folgenden Schritte:
- Erden eines Betonformteils,
- Besprühen des geerdeten Betonformteils mit einem Pulverlack und
- Trocknen des besprühten Betonformteils,
wobei die Pulverbeschichtung direkt auf das Betonformteil aufgetragen wird.

Im Rahmen der vorliegenden Erfindung wird unter dem Begriff "Pulverbeschichten" ein Beschichtungsvorgang verstanden, bei dem eine Pulverlackbeschichtung auf ein Betonformteil aufgebracht wird. Der Begriff "Pulverbeschichten" wird äquivalent zum Begriff "Pulverlackbeschichten" verwendet. Der Begriff "Pulverbeschichtung" wird äquivalent zu den Begriffen "Pulverlackbeschichtung" oder "Pulverschicht" oder "Pulverlackschicht" verwendet.

Der Ausdruck "wobei die Pulverbeschichtung direkt auf das Betonformteil aufgetragen wird", wie im Rahmen der vorliegenden Erfindung verwendet, bezeichnet das unmittelbare Aufbringen des Pulverlacks auf das Betonformteil; eine Schicht zwischen Betonformteil und Pulverlack bzw. das Aufbringen einer Schicht auf das Betonformteil vor Applikation des Pulverlacks ist im Rahmen der vorliegenden Erfindung nicht vorgesehen.

Der Begriff "Erden" wird entsprechend der dem Fachmann bekannten Bedeutung verwendet und bezeichnet im Rahmen der vorliegenden Erfindung den Aufbau einer leitfähigen Verbindung zwischen dem Betonformteil und einer elektrisch leitfähigen Umgebung.

Der Begriff "Betonverbundmaterial", wie er im Rahmen der vorliegenden Erfindung verwendet wird, bezeichnet ein Material bestehend aus einem Verbund, umfassend ein Betonformteil und eine Pulverlackschicht direkt auf der Oberfläche (einschließlich Poren und Hohlräume) des Betonformteils, was bedeutet, dass die Pulverlackschicht in direktem Kontakt mit der Oberfläche des Betonformteils ist.

Der Begriff "Feuchtigkeit", wie im Rahmen der vorliegenden Erfindung verwendet, bezieht sich auf den Wassergehalt des Betonformteils.

Die "elektrische Leitfähigkeit" gibt die Fähigkeit eines Stoffes an, elektrischen Strom zu leiten. Im Rahmen der vorliegenden Erfindung wird der Begriff zur Beschreibung der elektrischen Leitfähigkeit des Betonformteils verwendet.

Der Begriff "Oberfläche", wie im Rahmen der vorliegenden Erfindung verwendet, definiert die Grenzfläche des Betonformteils zur Umgebung, und schließt auch die Poren und Hohlräume auf der Oberfläche des Betonformteils ein. Die Oberfläche ist demnach das Äußere des Betonformteils, der Teil, der den Umwelteinflüssen ausgesetzt ist. Der restliche Teil des Betonformteils, der nicht Oberfläche ist, bildet das Innere des Betonformteils.

Das im Rahmen der vorliegenden Erfindung für die Pulverbeschichtung vorgesehene Betonformteil ist auf Zement-Basis, welches in bekannter Weise durch Zusammenmischen, in Form bringen und Trocknen von üblichem Zement, feiner Gesteinskörnung und Wasser erhalten wird. Das Betonformteil kann im Rahmen der vorliegenden Erfindung die Form eines Behältnisses mit diversen Grundflächengeometrien, so zum Beispiel runder, ovaler, kubischer, rechteckiger, sichelförmiger oder unregelmäßiger Grundfläche, haben, oder in Form einer Röhre sein, welche nach unten und oben hin offen ist, und einen runden, ovalen, kubischen, rechteckigen, sichelförmigen oder unregelmäßigen Querschnitt haben kann. Übliche Betonformteile sind Betonrohre, Schalbetonstein, Betontöpfe oder Pflanzenringe.

Vor dem erfindungsgemäßen Pulverbeschichten des Betonformteils wird dessen Oberfläche nach bekannten Verfahren gereinigt, zum Beispiel durch Abbürsten des Betonformteils. Dadurch wird die Oberfläche des Betonformteils von Schmutzpartikeln befreit, was eine gleichmäßige Auftragung des Pulverlacks gewährleistet und eine spätere Beschädigung der Pulverlackschicht, etwa durch Abblättern, verhindert.

Vor Applikation des Pulverlacks wird das gereinigte Betonteil geerdet. Die Erdung erfolgt durch Aufhängung des Betonformteils mittels einer Aufhängevorrichtung, so dass ein leitfähiger Kontakt zwischen Betonformteil und Besprühungsvorrichtung herstellt wird.

Das gereinigte Betonformteil besitzt beim Erden vorzugsweise eine elektrische Leitfähigkeit von 0.1 bis 0.9 S/m. In weiteren bevorzugten Ausführungsformen der Erfindung, in Kombination mit jeder der vorhergehenden und nachfolgenden Ausführungsformen, beträgt die elektrische Leitfähigkeit des Betonformteils 0.2 bis 0.8 S/m, 0.3 bis 0.7 S/m und 0.4 bis 0.6 S/m. Insbesondere bevorzugt ist eine elektrische Leitfähigkeit von 0.3 bis 0.5 S/m.

Die elektrische Leitfähigkeit des Betonformteils kann bei Raumtemperatur (20 bis 30 °C) mittels gängiger, dem Fachmann bekannter Verfahren, zum Beispiel mit einem üblichen Leitfähigkeitsmessgerät, bestimmt werden.

Das gereinigte Betonformteil besitzt beim Erden vorzugsweise eine Feuchtigkeit von maximal 5.0 Gew.-%, bezogen auf das Gesamtgewicht des Betonformteils. In weiteren bevorzugten Ausführungsformen, in Kombination mit jeder der vorhergehenden und nachfolgenden Ausführungsformen, beträgt die Feuchtigkeit des Betonformteils beim Erden 0.3 bis 4.0 Gew.-% und 0.4 bis 3.5 Gew.-%. Insbesondere bevorzugt ist eine Feuchtigkeit von 0.5 bis 3.0 Gew.-%.

Die Feuchtigkeit an der Oberfläche des Betonformteils beträgt beim Erden vorzugsweise maximal 1.5 Gew.-%, bezogen auf das Gesamtgewicht des Betonformteils. In weiteren bevorzugten Ausführungsformen, in Kombination mit jeder der vorhergehenden und nachfolgenden Ausführungsformen, beträgt die Feuchtigkeit an der Oberfläche 0.1 bis 1.3 Gew.-%, 0.3 bis 1.1 Gew.-% und 0.5 bis 0.9 Gew.-%. Insbesondere bevorzugt ist eine Feuchtigkeit von 0.6 bis 0.8 Gew.-% an der Oberfläche des Betonformteils.

Die Feuchtigkeit des Betonformteils kann bei Raumtemperatur (20 bis 30 °C) mittels eines üblichen Messgeräts zur Feuchtigkeitsbestimmung gemessen werden (z.B. mittels eines *DampMaster Pro* Feuchtigkeitsmessgeräts der Firma *Laserliner*). Für die Feuchtigkeitsmessung an der Oberfläche des Betonformteils wird die Elektrode des Feuchtigkeitsmessgeräts an die Oberfläche des Betonformteils gehalten, und der gemessene Wert von der LCD Anzeige des Geräts abgelesen.

Die elektrische Leitfähigkeit des Betonformteils wird bestimmt durch die Feuchtigkeit des Betonformteils. Ist die Feuchtigkeit zu hoch, so kann sie gemäß dem Fachmann bekannter Verfahren eingestellt werden, z.B. durch Trocknung des Betonformteils.

Das Besprühen des Betonformteils mit dem Pulverlack erfolgt nach dessen Erdung mittels einer üblichen Pulversprühpistole, in welcher der Pulverlack elektrostatisch aufgeladen wird. Durch Austreten aus der Düse der Pulversprühpistole werden die geladenen Partikel zur Oberfläche des geerdeten Betonformteils transportiert, wo sie sich unter Bildung einer Pulverlackschicht niederschlagen, welche durch die elektrostatische Wechselwirkung der entgegengesetzt geladenen Teilchen auf dem Betonformteil anhaftet.

Die Aufladung des Pulverlacks in der Pulversprühpistole erfolgt dabei auf bekannte Weise entweder durch Reibung (triboelektrisches Verfahren) oder durch Anlegung einer Spannung (Corona-Verfahren).

In einer bevorzugten Ausführungsform der Erfindung, in Kombination mit jeder der vorhergehenden und nachfolgenden Ausführungsformen, wird das triboelektrische Verfahren zur Aufladung des Pulverlacks angewendet. Die Aufladung der Teilchen erfolgt dabei durch Reibung in einem Teflonbeschichteten Kunststoffrohr in Abwesenheit einer Fremdspannung. Die für das triboelektrische Verfahren verwendeten Pulversprühpistolen sind durch eine längere Bauform gekennzeichnet. Die Trennung der Pulverlackteilchen von der Lackierpistole erfolgt schneller als sich die Ladungen wieder verteilen können. Dadurch bleiben die Pulverpartikel geladen und werden an der Düse der Pulversprühpistole zerstäubt und auf das entgegengesetzt geladene Betonformteil gesprüht, wo sie aufgrund des Polaritätsunterschiedes anhaften.

In einer alternativen bevorzugten Ausführungsform der Erfindung, in Kombination mit jeder der vorhergehenden und nachfolgenden Ausführungsformen, wird zur Aufladung der Teilchen das Corona-Verfahren verwendet. Dabei werden die Pulverlackpartikel in der Pulversprühpistole an einer Elektrode vorbeigeführt, an der eine Spannung von 30 bis 100 kV anliegt. Die geladenen Teilchen werden an der Düse der Pulversprühpistole zerstäubt und auf das entgegengesetzt geladene Betonformteil gesprüht, wo sie aufgrund des Polaritätsunterschiedes anhaften. Der Vorteil der Anwendung des Corona-Verfahrens im Rahmen der vorliegenden Erfindung besteht darin, dass eine Vielzahl von Pulverlacken mit dieser Anwendung kompatibel ist, und dass die Lackierpistolen einen geringen Verschleiß aufweisen. Besonders bevorzugt im Rahmen der vorliegenden Erfindung ist daher das Corona-Verfahren.

In einer bevorzugten Ausführungsform der Erfindung, in Kombination mit jeder der vorhergehenden und nachfolgenden Ausführungsformen, erfolgt das Besprühen des Betonformteils mit dem Pulverlack bei Temperaturen von 20 bis 50 °C. Dabei findet keine Vorvernetzung des Pulverlacks während des Besprühungsvorgangs statt. In einer besonders bevorzugten Ausführungsform, in Kombination mit jeder der vorhergehenden und nachfolgenden Ausführungsformen, erfolgt das Besprühen des Betonformteils bei Raumtemperatur (20 bis 30 °C).

Für die Pulverbeschichtung des Betonformteils werden handelsübliche, temperatur-, licht- und witterungsbeständige Pulverlack-Zusammensetzungen verwendet, die dem Fachmann bekannt sind. In einer bevorzugten Ausführungsform der Erfindung, in Kombination mit jeder der vorhergehenden und nachfolgenden Ausführungsformen, umfasst der Pulverlack mindestens ein Bindemittel. Außerdem können Farbmittel und Zusatzstoffe, wie Härter, Additive und Füllstoffe, enthalten sein.

Die Hauptkomponente des Pulverlacks stellt das Bindemittel dar. In einer bevorzugten Ausführungsform der Erfindung, in Kombination mit jeder der vorhergehenden und nachfolgenden Ausführungsformen, sind die im Pulverlack verwendeten Bindemittel polymere organische Verbindungen, die thermoplastische oder duroplastische Eigenschaften haben, und auf Polyurethan-, Polyacrylat-, Epoxidharz- oder Polyester-Basis oder auf Basis einer Mischung davon sind. Das Bindemittel ist im Wesentlichen verantwortlich für die physikalischen Eigenschaften des Pulverlacks. So zeichnen sich insbesondere Pulverlacke auf Polyurethan- und Polyester-Basis durch eine hohe Witterungs- und Lichtbeständigkeit aus. Ebenfalls können Hybrid-Pulverlacke verwendet werden, wie zum Beispiel Mischungen auf Epoxidharz/Polyester-Basis, welche sich durch eine verbesserte Witterungsstabilität gegenüber den reinen Epoxidharzsystemen auszeichnen.

In einer bevorzugten Ausführungsform der Erfindung umfasst der Pulverlack zusätzlich zu dem mindestens einen Bindemittel mindestens ein Farbmittel, welches ein Pigment und/oder einen Farbstoff darstellen kann.

Ein Pigment ist eine organische oder anorganische Verbindung, welche sich durch eine bunte (zum Beispiel blau, rot, gelb, grün oder Abstufungen oder Mischungen dieser Farbtöne) oder nichtbunte (zum Beispiel weiß, schwarz, grau oder Abstufungen oder Mischungen dieser Farbtöne) intensive Färbung auszeichnet und welche im Pulverlack selbst unlöslich ist. Pigmente sorgen für einen deckenden Eindruck der Beschichtung und stellen den Farbton ein. Durch die hohen Temperaturen, die beim Trocknen des besprühten Betonformteils auftreten können, beschränkt sich die Auswahl an Pigmenten auf solche mit hoher Temperaturstabilität. Trotz der Beschränkung der Pigmentpalette können nahezu alle verfügbaren Farbtöne im Rahmen der vorliegenden Erfindung realisiert werden.

Als Pigmente in Pulverlacken können anorganische Metalloxide und Mischphasenoxidpigmente vom Rutil- und Spinelltyp verwendet werden. Diese Pigmentgruppe zeichnet sich durch eine grobe Teilchengröße und somit leichte Dispergierbarkeit aus. Die Farbstärke dieser Gruppe ist meist kleiner als bei den organischen Pigmenten, dafür besitzen sie ein größeres Deckvermögen und eine überwiegend größere Temperaturbeständigkeit. Die wichtigsten anorganischen Pigmente für Pulverlackanwendungen im Rahmen der vorliegenden Erfindung sind Titandioxid (weiß), Eisenoxidpigmente (gelb, rot, schwarz), Chromgrün (grün), Chromgelb (gelb), Bismutvanadat (gelb), Cobaltoxide (blau, grün), verschiedene Molybdate, Eisencyanblau ("Berliner Blau") und Ultramarin (blau).

Zur Erzielung von intensiven Buntfarbtönen können farbstarke organische Pigmente in dem Pulverlack verwendet werden, zum Beispiel Pigmentruß (Schwarz), Azopigmente (Gelb, orange, rot), Phthalocyanine (blau, grün), Chinacridone (rot), Diketo-Pyrrolo-Pyrrol-Pigmente (orange, rot, rubin), Dioxazinpigmente (violett) oder polycyclische Pigmente.

Farbstoffe sind im Gegensatz zu Pigmenten im Beschichtungsmedium löslich. Sie liegen im Pulverlack nicht als Festkörper, sondern gelöst vor. Dies ergibt einen lasierenden, das heißt nicht deckenden Farbeindruck. Nachteilig beim Einsatz von Farbstoffen sind die im Vergleich zu Pigmenten geringeren Beständigkeiten, wie beispielsweise Licht- und Witterungsstabilität, die bereits durch die wenig beständigen organischen Pigmente übertroffen werden.

Die Füllstoffe des Pulverlacks liegen wie die Pigmente als vom Bindemittel umhüllter Feststoff im Lacksystem vor. Sie verleihen dem Lackfilm Volumen, wobei die kleineren Pigmentteilchen die Freiräume zwischen den Füllstoffteilchen einnehmen und sich so eine optimale Packungsdichte einstellt. Funktionell wirken Füllstoffe im Pulverlack als Mattierungsmittel.

Die am häufigsten in handelsüblichen Pulverlacken verwendeten Füllstoffe sind Calciumcarbonate. Diese können gefällt oder als natürlich vorkommende Kreide eingesetzt werden. Zur Beeinflussung von Verlaufseigenschaften eignet sich Talkum, ein natürlich vorkommendes Magnesiumsilikathydrat. Als Verlaufsmittel können auch Polyacrylate eingesetzt werden. Sie sorgen in kleinen Zugabemengen im Pulverlackfilm für eine reduzierte Oberflächenspannung, und somit für einen glatten und kraterfreien Verlauf. Kugelförmiges Bariumsulfat ist gut zur Steuerung der Packungsdichte eines Lackes geeignet. Bariumsulfate sind wie Kreide natürlich (Schwerspat) und gefällt (Blanc Fixe) verwendbar.

Additive können als Hilfsmittel in handelsüblichen Pulverlacken eingesetzt werden. Sie beeinflussen wichtige Parameter, wie die Oberflächenbeschaffenheit, also Verlauf oder Struktur, Glanz, Oberflächenhärte und Verarbeitungsbedingungen. Entgasungsadditive entlüften den Lackfilm, so dass Reaktionsgase und Untergrundausgasungen über die Lackoberfläche abgeführt werden können. Die Lackoberfläche bleibt dadurch frei von Nadelstichen. Die am häufigsten in handelsüblichen Pulverlacken für diesen Zweck verwendete Substanz ist Benzoin.

Um die Pulverlackbeschichtung auf dem Betonformteil zu einem geschlossenen Film zu vernetzen, wird das Betonformteil nach Besprühung mit dem Pulverlack getrocknet. Diesen Vorgang bezeichnet man auch als "aufschmelzen". Die Trocknung kann bei Temperaturen von 80 bis 300 °C erfolgen. In bevorzugten Ausführungsformen, in Kombination mit jeder der vorhergehenden und nachfolgenden Ausführungsformen, erfolgt die Trocknung des pulverbeschichteten Betonformteils bei Temperaturen von 90 bis 270 °C und 100 bis 240 °C. Insbesondere bevorzugt ist eine Trocknung bei 110 bis 210 °C. Die Trocknung des Betonverbundmaterials erfolgt dabei in einem handelsüblichen Ofen, der mit Öl oder Gas oder elektrisch betrieben wird. Bei dem Ofen kann es sich zum Beispiel um einen Kammerofen handeln, wobei die besprühten Betonformteile auf einen fahrbaren Wagen gestellt werden, welcher komplett in den Ofen geschoben wird. Alternativ kann die Trocknung des Betonverbundmaterials im Durchlaufbetrieb in einem Ofen mit Förderband erfolgen. Die Trocknung des pulverlackbeschichteten Betonformteils dauert dabei üblicherweise 1 bis 3 Stunden. In einer bevorzugten Ausführungsform der Erfindung, in Kombination mit jeder der vorhergehenden und nachfolgenden Ausführungsformen, dauert die Trocknung des besprühten Betonformteils 30 min bis 90 min. Insbesondere bevorzugt ist eine Trocknungsdauer von 10 bis 60 min.

Nach Trocknung des Pulverlack-beschichteten Betonformteils wird ein erfindungsgemäßes Betonverbundmaterial erhalten, welches je nach eingesetztem handelsüblichen Pulverlack blau, gelb, grün, türkis, violett, rot, rubin, rosa, orange, schwarz, braun, grau, beige, weiß oder in einer Abstufung dieser Farbtöne gefärbt ist. Enthält der eingesetzte Pulverlack kein Farbmittel, so wird ein klares Pulverlack-beschichtetes Betonverbundmaterial erhalten.

Die Schichtdicke der Pulverlackbeschichtung in dem erfindungsgemäßen Betonverbundmaterial kann 60 bis 250 µm betragen. In einer bevorzugten Ausführungsform, in Kombination mit jeder vorherigen oder nachfolgenden Ausführungsform, beträgt die Schichtdicke 80 bis 180 µm. Insbesondere bevorzugt ist eine Schichtdicke von 100 bis 130 µm.

Das erfindungsgemäße Verfahren zum elektrostatischen Pulverbeschichten eines Betonformteils birgt den Vorteil, dass vor der Pulverlackapplikation keine weitere Schicht auf das Betonformteil aufgetragen werden muss, um seine Leitfähigkeit zu verbessern. Dadurch entfallen ein weiterer Arbeitsschritt sowie der Verbrauch zusätzlichen Materials, was das Verfahren insgesamt sowohl zeitals auch kosteneffizient macht. Die weiteren Vorteile des erfindungsgemäßen Verfahrens bestehen darin, dass die Haftungsstabilität der Pulverlackschicht auf dem Betonformteil verbessert und eine gleichmäßige Auftragung der Pulverbeschichtung auf dem Betonformteil gewährleistet wird. Die Auftragung der Beschichtung erfolgt dabei auch in den Poren und Hohlräumen der Oberfläche des Betonformteils gleichmäßig, wodurch ein optisch ansprechendes erfindungsgemäßen Betonverbundmaterial erhalten wird.

In einer besonders bevorzugten Ausführungsform der Erfindung, in Kombination mit jeder der vorhergehenden und nachfolgenden Ausführungsformen, hat das Betonformteil beim Erden eine Feuchtigkeit von 0.6 bis 0.8 Gew.-% an der Oberfläche, bezogen auf das Gesamtgewicht des Betonformteils, erfolgt das Besprühen des geerdeten Betonformteils bei Raumtemperatur (20 bis 30 °C) mittels Corona-Verfahren, und wird das Trocknen des besprühten Betonformteils bei 110 bis 210 °C für 10 bis 60 min durchgeführt.

Erfolgt das erfindungsgemäße Pulverlackbeschichten des Betonformteils unter diesen bevorzugten Bedingungen, so ist die Pulverlackbeschichtung auf dem Betonformteil besonders stabil, und die Auftragung der Pulverlackbeschichtung, auch in den Poren und Hohlräumen der Betonformteiloberfläche, ist besonders gleichmäßig, wodurch das erfindungsgemäße Betonverbundmaterial optisch besonders ansprechend ist.

Das erfindungsgemäße Betonverbundmaterial eignet sich zur Verwendung als Betonbauteil. Alternativ eignet sich das erfindungsgemäße Betonverbundmaterial auch als Dekorationsgegenstand. In einer bevorzugten Ausführungsform, in Kombination mit jeder der vorhergehenden und nachfolgenden Ausführungsformen, kann es sich bei dem Dekorationsgegenstand beispielsweise um ein Behältnis, ein Rohr oder einen Ring handeln, die als Pflanzentopf, Pflanzenkübel, Übertopf, Schalbetonstein oder Pflanzenring verwendet werden können. Durch die Pulverbeschichtung des Betonformteils verfügt das erfindungsgemäße Betonformteil über eine hohe Temperatur-, Licht- und Witterungsbeständigkeit. Deshalb eignet sich das erfindungsgemäße Betonverbundmaterial insbesondere im Freien als Dekorationsgegenstand, zum Beispiel im Garten, auf der Terrasse oder auf dem Balkon.

Die folgenden Beispiele sollen die Erfindung weiter veranschaulichen.

### Beispiele

### Beispiel 1 - Allgemeines Verfahren zur Pulverbeschichtung

Ein gereinigtes Betonformteil wird geerdet und bei Raumtemperatur mittels Corona-Sprühverfahren eine Pulverlackbeschichtung auf das Betonformteil aufgetragen. Anschließend wird das besprühte Betonformteil in einem Kammerofen bei Temperaturen von 110 bis 210 °C getrocknet. Nachdem die benötige Trocknungszeit (gemäß den Herstellerangaben des Pulverlacks) erreicht ist, wird das Betonverbundmaterial aus dem Ofen genommen und bei Raumtemperatur abgekühlt.

### Beispiel 2 - Gelbe Pulverbeschichtung

Ein gereinigter prismatischer Betontopf (30 cm x 30 cm Grundfläche, Höhe 40 cm) mit einer Feuchtigkeit von 0.7 Gew.-% an der Oberfläche wird geerdet. Bei Raumtemperatur wird mittels Corona-Sprühverfahren eine gelbgrüne Pulverlackbeschichtung (*PI1004ARG618* der Firma *Freilacke*) aufgetragen. Anschließend wird das besprühte Betonformteil umgehend in einem Kammerofen bei einer Temperatur von 200 °C für 30 min getrocknet. Das Betonverbundmaterial wird anschließend aus dem Ofen genommen und für 1 Stunde bei Raumtemperatur abgekühlt.

### Beispiel 3 - Blaue Pulverbeschichtung

Ein gereinigter zylindrischer Pflanzenring (Höhe ca. 30 cm, Durchmesser 40 cm) mit einer Feuchtigkeit von 0.6 Gew.-% an der Oberfläche wird geerdet. Bei Raumtemperatur wird mittels Corona-Sprühverfahren eine ultrablaue Pulverlackbeschichtung (*PF1004ARG502* der Firma *Freilacke*) aufgetragen. Anschließend wird das besprühte Betonformteil umgehend in einem Kammerofen bei einer Temperatur von 170 °C für 1 Stunde getrocknet. Das Betonverbundmaterial wird aus dem Ofen genommen und für 1 Stunde bei Raumtemperatur abgekühlt.

### Beispiel 4 - Verwendung des Betonverbundmaterials als Pflanzenring

Der pulverbeschichtete zylindrische Pflanzenring aus Beispiel 3 wird mit einem Einlegeblech aus Edelstahl ausgestattet. Eine circa 2 cm dicke Drainageschicht aus Blähton, feinem Kies, Styroporkügelchen oder Perlite wird in die Anordnung gefüllt, gefolgt von einer circa 5 cm dicken Schicht guter humusreicher Blumenerde. Eine Pflanze wird mittig und gerade in das pulverbeschichtete Betongefäß platziert, rundherum mit Blumenerde gefüllt und leicht verdichtet. Dabei wird ein mindestens 1 cm hoher Abstand zwischen Erde und dem Rand des Pflanzenrings gelassen, um das Gießen zu erleichtern und das Überlaufen von Gießwasser zu verhindern. Durch die witterungsbeständige Polyester-basierte Pulverlackbeschichtung des Pflanzenrings eignet sich die Anordnung zur Verwendung als Dekorationsgegenstand im Freien.

## Patentansprüche

1. Verfahren zur elektrostatischen Pulverbeschichtung eines Betonformteils, umfassend die folgenden Schritte:
- Erden eines Betonformteils,
- Besprühen des geerdeten Betonformteils mit einem Pulverlack und
- Trocknen des besprühten Betonformteils,
wobei die Pulverbeschichtung direkt auf das Betonformteil aufgetragen wird.

2. Verfahren nach Anspruch 1, **dadurch gekennzeichnet, dass** die Feuchtigkeit an der Oberfläche des Betonformteils maximal 1.5 Gew.-% beträgt, bezogen auf das Gesamtgewicht des Betonformteils.

3. Verfahren nach Anspruch 1 oder 2, **dadurch gekennzeichnet, dass** das Besprühen mit dem Pulverlack bei 20 bis 50 °C erfolgt.

4. Verfahren nach mindestens einem der Ansprüche 1 bis 3, **dadurch gekennzeichnet, dass** das Trocknen des besprühten Betonformteils bei 80 bis 300 °C erfolgt.

5. Verfahren nach mindestens einem der Ansprüche 1 bis 4, **dadurch gekennzeichnet, dass** das Betonformteil mit einer Feuchtigkeit von 0.6 bis 0.8 Gew.-% an der Oberfläche, bezogen auf das Gesamtgewicht des Betonformteils, geerdet wird, dass das Besprühen des geerdeten Betonformteils mittels Corona-Verfahren erfolgt, und dass das Trocknen des besprühten Betonformteils bei 110 bis 210 °C durchgeführt wird.

6. Betonverbundmaterial, umfassend ein Betonformteil und eine Pulverbeschichtung, **dadurch gekennzeichnet, dass** es erhältlich ist nach einem elektrostatischen Pulverbeschichtungsverfahren, umfassend die folgenden Schritte:
- Erden eines Betonformteils,
- Besprühen des geerdeten Betonformteils mit einem Pulverlack und
- Trocknen des besprühten Betonformteils,
wobei die Pulverbeschichtung direkt auf das Betonformteil aufgetragen wird.

7. Betonverbundmaterial nach Anspruch 6, **dadurch gekennzeichnet, dass** die Feuchtigkeit an der Oberfläche des Betonformteils maximal 1.5 Gew.-% beträgt, bezogen auf das Gesamtgewicht des Betonformteils.

8. Betonverbundmaterial nach Anspruch 6 oder 7, **dadurch gekennzeichnet, dass** als elektrostatisches Pulversprühverfahren das Corona-Verfahren verwendet wird.

9. Betonverbundmaterial nach mindestens einem der Ansprüche 6 bis 8, **dadurch gekennzeichnet, dass** das Besprühen des geerdeten Betonteils mit dem Pulverlack bei 20 bis 50 °C erfolgt.

10. Betonverbundmaterial nach mindestens einem der Ansprüche 6 bis 9, **dadurch gekennzeichnet, dass** das Trocknen des besprühten Betonformteils bei 80 bis 300 °C erfolgt.

11. Betonverbundmaterial nach mindestens einem der Ansprüche 6 bis 10, **dadurch gekennzeichnet, dass** das Betonformteil mit einer Feuchtigkeit von 0.6 bis 0.8 Gew.-% an der Oberfläche, bezogen auf das Gesamtgewicht des Betonformteils, geerdet wird, dass das Besprühen des geerdeten Betonformteils mittels Corona-Verfahren erfolgt, und dass das Trocknen des besprühten Betonformteils bei 110 bis 210 °C durchgeführt wird.

12. Betonverbundmaterial nach mindestens einem der Ansprüche 6 bis 11, **dadurch gekennzeichnet, dass** der Pulverlack mindestens ein Bindemittel umfasst.

13. Betonverbundmaterial nach mindestens einem der Ansprüche 6 bis 12, **dadurch gekennzeichnet, dass** das Bindemittel des Pulverlacks auf Polyurethan-, Polyacrylat-, Epoxidharz- oder Polyester-Basis oder auf Basis einer Mischung davon ist.

14. Betonverbundmaterial nach mindestens einem der Ansprüche 6 bis 13, **dadurch gekennzeichnet dass** der Pulverlack mindestens ein Farbmittel, welches aus mindestens einem Pigment und/oder mindestens einem Farbstoff gewählt wird, umfasst.

15. Verwendung des Betonverbundmaterials nach mindestens einem der Ansprüchen 6 bis 14 als Betonbauteil oder Dekorationsgegenstand.
